# EUROPEAN PATENT SPECIFICATION

(11) **EP 1 270 395 B1**
(45) Date of publication and mention of the grant of the patent: **26.07.2006**
(21) Application number: 02014362.4
(22) Date of filing: 27.06.2002
(51) Int. Cl.: B62M 23/02, B62M 7/12

(54) **Electric driving unit and electric vehicle**
Elektrische Einheit und elektrische Fahrzeuge
Ensemble électrique et véhicule électrique

(30) Priority: 27.06.2001 JP 2001194251
(43) Date of publication of application: 02.01.2003
(73) Proprietor: YAMAHA HATSUDOKI KABUSHIKI KAISHA, Iwata-shi, Shizuoka-ken (JP)
(72) Inventor: Shirazawa, Hideki, Iwata-shi, Shizuoka-ken (JP)
(74) Representative: Grünecker, Kinkeldey, Stockmair & Schwanhäusser Anwaltssozietät

(56) References cited:
- EP-A2- 0 980 821
- US-A- 5 691 584
- US-B1- 6 321 863
- PATENT ABSTRACTS OF JAPAN vol. 0165, no. 03 (M-1326), 16 October 1992 (1992-10-16) & JP 4 185207 A (AISIN AW CO LTD), 2 July 1992 (1992-07-02)

## Description

The present invention relates to an electric driving unit and an electric vehicle, in particular an electric two-wheeled vehicle having a casing in which an electric motor and a control are installed.

Conventionally, there has been known an electric driving unit that drives a wheel with an electric motor, as disclosed, for example, in JP-A-H11-34965. The electric driving unit shown in this publication is used as a driving source for a electric two-wheeled vehicle and provided with a swing arm for supporting a rear wheel.

The swing arm for supporting the rear wheel has an electric motor, a speed reducer and an axle that are provided at its oscillating end and also has a control for controlling the electric motor that is mounted to the arm section of the swing arm. The electric motor and the speed reducer are installed such that their axes are parallel to the transverse direction of the vehicle body, the speed reducer is arranged in front of the axle in the longitudinal direction of the vehicle body, and the electric motor is located above the speed reducer.

The control is housed in a storage compartment isolated from the electric motor and is electrically connected to the electric motor in a way of wiring.

In the conventional electric driving unit constituted as described, one storage space for housing an electric motor and another storage space for housing a control are formed separately. It is therefore a problem that, in order to form the separate storage spaces, larger volume of partition wall is required, causing the unit to be larger as a whole and increase of production cost. Furthermore, the arrangement in which the speed reducer and the electric motor are placed one upon the other (i.e. high and low) and the speed reducer and the axle are placed one after the other (i.e. fore and aft) is also a cause to make the unit larger.

Additionally, long conductive wires for connecting between the control and the electric motor are required, because the former is remote forwardly from the latter. This causes the increase of the cost, in other words, the expense for wiring increases due to a work necessary to connect both ends of wires to the control and the electric motor.

Furthermore, since the conductive wires between the motor storage space and the control storage space are exposed externally, those exposed wires may be damaged from pebbles thrown up by the rear wheel during running. Also, one wire has at least two electrical connections. Accordingly, with the increase of the number of electrical connections, the possibility of damages on the electrical connections may be increased and the reliability thereof will be reduced.
EP 0980821 A2 according to the preamble of claim 1 discloses an electric driving unit comprising a casing with a motor storage space, an electric motor and a speed reducer. The electric motor and the speed reducer are supported by, and arranged co-axial to, each other in the casing. A controlling means for controlling the electric motor is provided being disposed close to the electric motor within the motor storage space formed in the casing.

It is an objective of the present invention to provide a compact electric driving unit whose production cost is reduced.

This objective is solved by the features of claim 1.

Thus, there is provided an electric driving unit comprising a casing in and by which an electric motor and a speed reducer coaxially arranged each other are supported, wherein a control for controlling the electric motor is disposed close to the electric motor, within a motor storage space formed in the casing.

Therein, the electric motor and the control are contained in one storage space and, therefore, the volume of the partition walls can be reduced. Furthermore, since the electric motor and the speed reducer are coaxially arranged, both can be located at a position. The wires for connecting the control and the electric motor can be shorter in their length because the control is disposed close to the electric motor. Additionally, those wires can be contained within the motor storage space. The number of the electrical connections can be reduced by using electrode plates instead of wires for connecting the control and the electric motor such that the electrodes plate protruding from the control is electrically secured at their distal ends to the electric motor.

Since the coils of the stator and the main magnets of the rotor are faced in an axial direction of the rotor, a compact arrangement can be attained.

According to a preferred embodiment, the electric motor comprises a stator having a plural number of coils, wherein the controlling means is disposed between different coils of the stator of the electric motor.

As the electric driving unit is one, wherein the control is disposed between coils in a stator of the electric motor, the element can be contained in one of the dead spaces formed between coils. Accordingly, the wiring length between the control and the electric motor can be shorter.

Beneficially, the coils are arranged in a shape of a ring segment in a circumferential direction of the stator, wherein adjacent coils are equally spaced to each other and a space is provided between a first and a last of said coils in the circumferential direction of the stator for housing the controlling means.

In other words, by removing at least one of the coils that are normally equally spaced in the circumferential direction, a space is formed between the coils for housing the control.

Accordingly, a control having a size equal to or larger size (compared to the prior art) can be contained within the electric motor without increase of the diameter thereof.

According to a further preferred embodiment, there is provided a hall element for detecting a position of a rotor of the electric motor being mounted on a surface of a substrate of the controlling means.

Thus, as the hall element for detecting the position of the rotor is mounted on the surface of a substrate in the control, any dedicated (separate) substrate on which a hall element is mounted (as has been done in the prior art) is not required.

Preferably, the rotor comprises a plural number of main magnets, wherein the hall element is adapted to detect the main magnets.

As the hall element detects main magnets, any (separate) sensor magnet detected by a dedicated hall element is not required.

According to another preferred embodiment, there is provided a heat radiating plate of a switching element in the controlling means which is in contact with the casing.

As the heat radiating plate of the switching element in the control is in contact with the motor storage casing, the heat generated in the switching element is conducted via the heat radiating plate to the motor storage casing.

Beneficially, the contact portion of the heat radiating plate of the switching element and a mating contact portion of the casing are formed such that one of the two contact portions has a concave shape and the other has a convex shape so as to fit each other.

As the contact portion of the heat radiating plate of the switching element and the mating contact portion of the motor storage casing are formed such that one of the two contact portions has a concave and the other has a convex so as to fit each other, the surface area of the contact between the heat radiating plate and the casing can be increased. Since the heat radiating plate is movable in the fitting direction relative to the casing, neither vibration of the casing is transmitted to the switching element nor thermal stress is created.

It is another objective of the present invention to provide an electric vehicle comprising the electric driving unit as discussed above and fabricated in low costs.

This objective is solved by an electric vehicle comprising a drive wheel, wherein the drive wheel is driven by an electric driving unit according to at least one of the preceding claims 1 to 7.

According to a preferred embodiment, there is provided an electric vehicle wherein an axis of the electric motor and an axis of the speed reducer are parallel to a transverse direction of the vehicle body and the output shaft of the speed reducer is common to an axle of the rear wheel.

Thus, in this embodiment, the electric vehicle comprises a drive wheel driven by an electric driving unit of any one of claims 1 through 7, wherein the common axis of the electric motor and the speed reducer is parallel to the transverse direction of the vehicle body; and the output shaft of the speed reducer is common to the axle of the drive wheel.

Thus, the electric vehicle according to this embodiment is run by driving directly the drive wheel with the electric driving unit located on one side of the drive wheel.

Preferably, a central portion of a motor mounting section in the transverse direction of the vehicle body is located in a relation of superposition with respect to the drive wheel, as seen from the rear side.

As the central portion of a motor mounting section in the transverse direction of the vehicle body is located in a relation of superposition with respect to the drive wheel, as seen from the rear side, the motor mounting section of the electric driving unit can be contained in a dead space formed inside of the drive wheel. Also, the central portion of the motor mounting section in the transverse direction is hidden by the drive wheel, as seen from the rear side.

According to a preferred embodiment, the electric vehicle comprises two wheels, wherein the rear wheel constitutes the drive wheel driven by the electric driving unit.

Beneficially, there is provided a swing arm for supporting the rear wheel being adapted to carry the electric driving unit and being pivotally mounted to a vehicle body frame.

Further beneficially, there is provided a common axis of the electric motor and the speed reducer being arranged parallel to a transverse direction of the vehicle body of the electric vehicle.

In particular, it is preferable if there is provided an electric two-wheeled vehicle having a rear wheel driven by an electric driving unit of any one of Claims 1 through 7, wherein a swing arm for supporting the rear wheel carries the electric driving unit and is pivotally up and down mounted to a vehicle body frame; the axis of the electric motor and the axis of the speed reducer are parallel to the transverse direction of the vehicle body; and the output shaft of the speed reducer is common to the axle of the rear wheel.

Thus, this electric two-wheeled vehicle is run by directly driving the drive wheel with the electric driving unit constituting the swing arm for supporting the rear wheel.

Therein, it is preferable if the central portion of a motor mounting section in the transverse direction of the vehicle is located in a relation of superposition with respect to the rear wheel, as seen from the rear side.

Therefore, the motor mounting section of the electric driving unit can be contained in a dead space formed inside of the rear wheel. Also, the central portion of the motor mounting section in the transverse direction is hidden by the drive wheel, as seen from the rear side.

Within the above embodiment, it is further beneficial if the controlling means for the electric driving unit is disposed at a front end of the motor mounting section in a longitudinal direction of the vehicle body, along an arm section of the swing arm.

In particular, if the electric two-wheeled vehicle control for the electric driving unit is disposed at the front end of the motor mounting section in the longitudinal direction of the vehicle body, along the arm section of the swing arm, the control and the electric motor can be located at approximately the same position in the transverse direction. As the control is located between the electric motor and the vehicle body frame, the wires for connecting the control to a battery and other electronic components mounted in the vehicle body frame can be routed along the swing arm supporting the rear wheel.

In the following, the present invention is explained in greater detail with respect to several embodiments thereof in conjunction with the accompanying drawings, wherein:
- Fig. 1: is a side view of an electric two-wheeled vehicle;
- Fig. 2: is a plan view of a swing arm for supporting a rear wheel;
- Fig. 3: is a side view of a swing arm for supporting a rear wheel, as seen from the right side of the vehicle body;
- Fig. 4: is also a side view of a swing arm for supporting a rear wheel, as seen from the right side of the vehicle body;
- Fig. 5: is a rear view of the swing arm for supporting the rear wheel;
- Fig. 6: is a horizontally sectional view of the essential sections; and
- Fig. 7: is a sectional view of a cooling structure of a switching element.

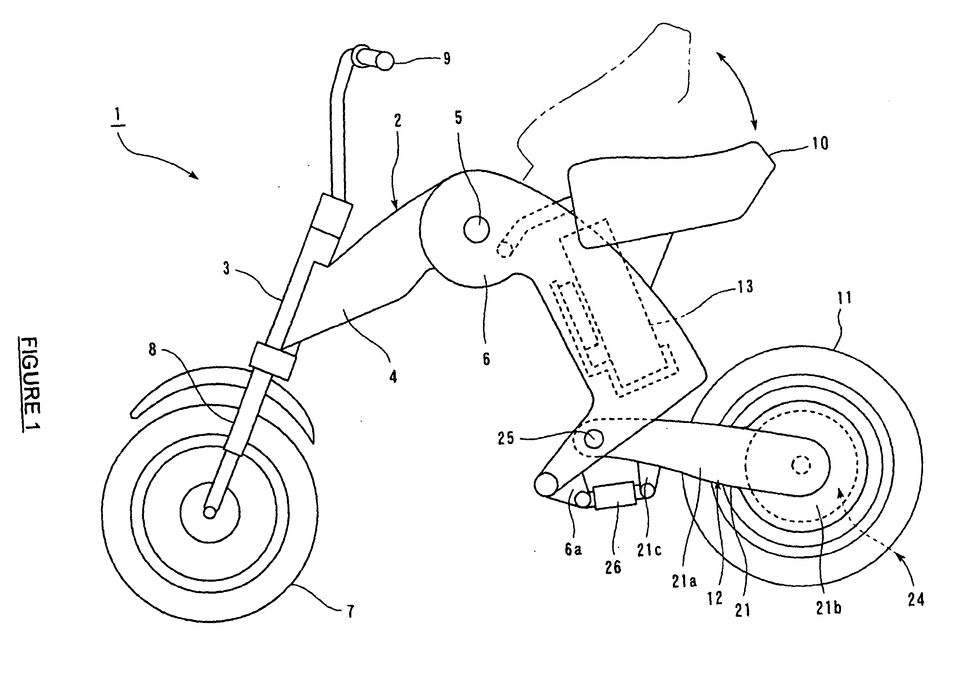

Now, referring to Figs. 1 through 7, one embodiment of an electric two-wheeled vehicle using an electric driving unit as will be discussed in detail below.

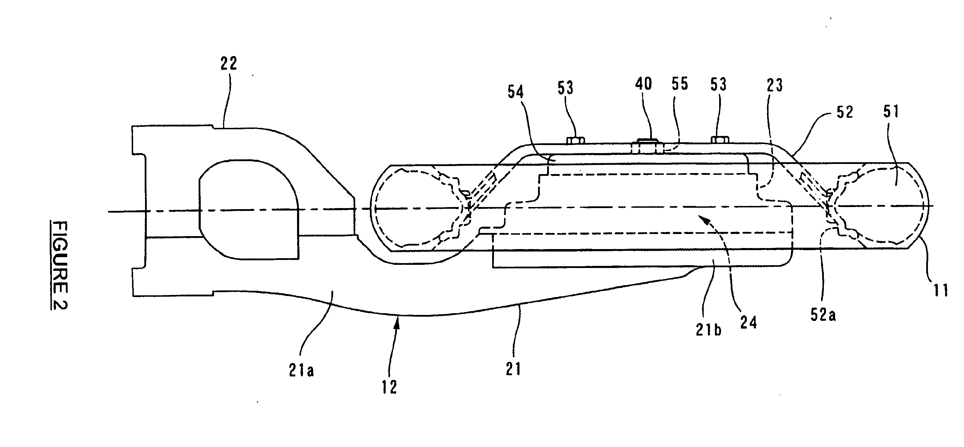

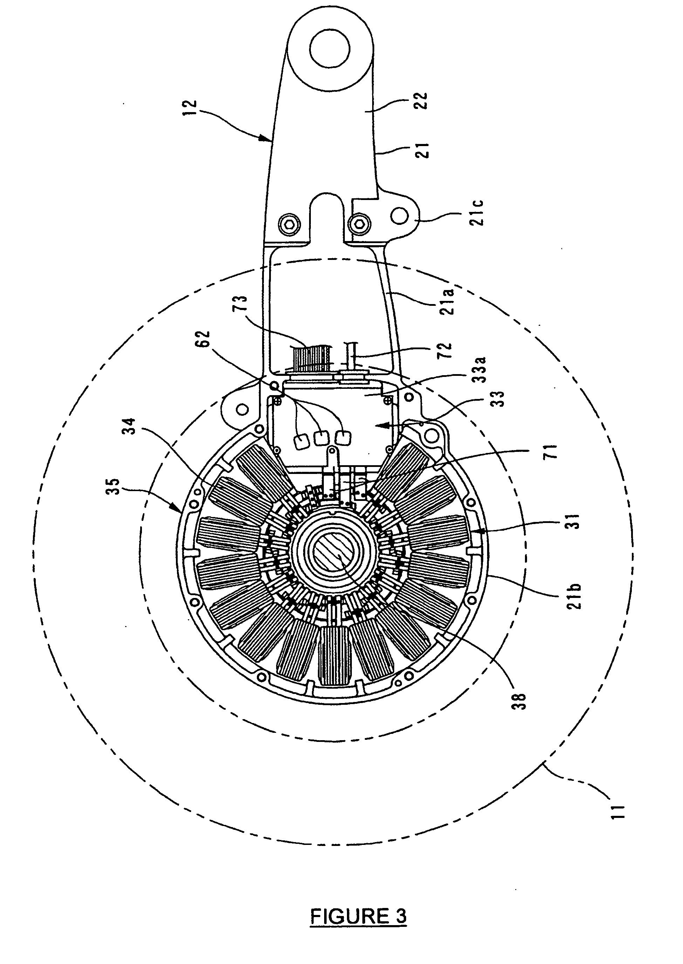

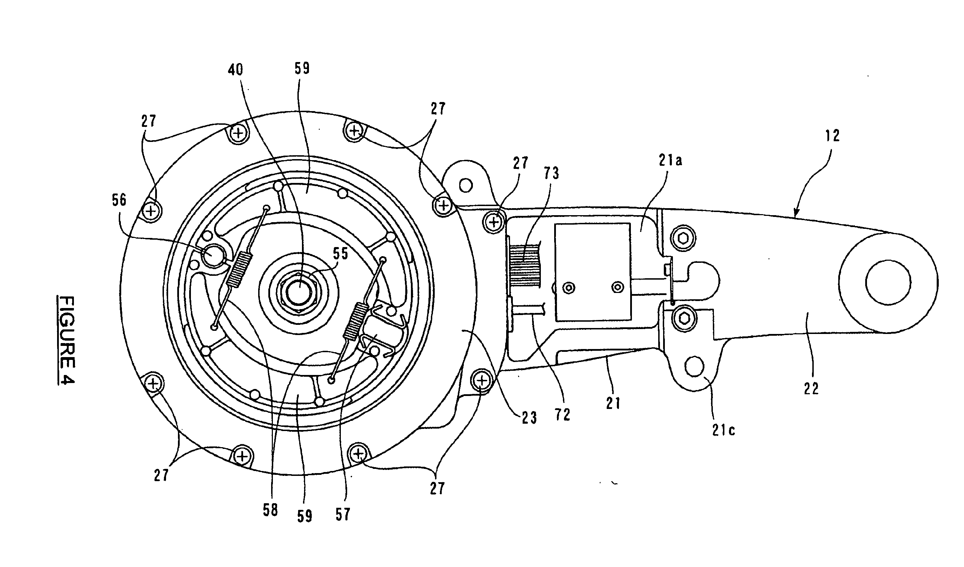

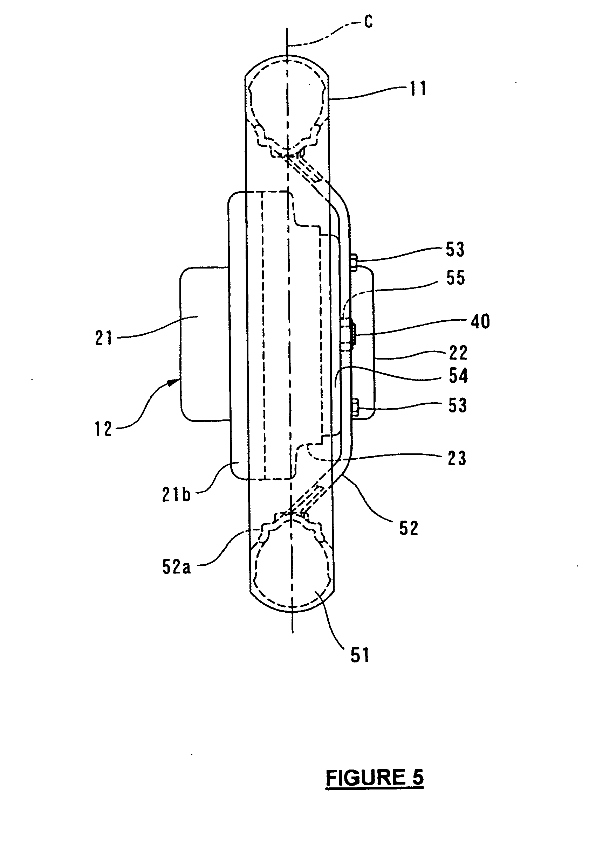

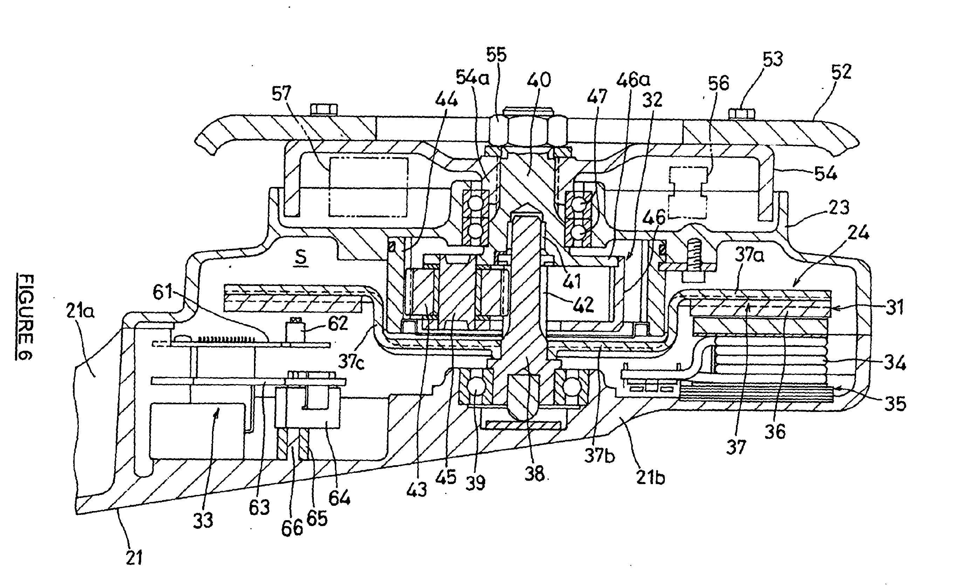

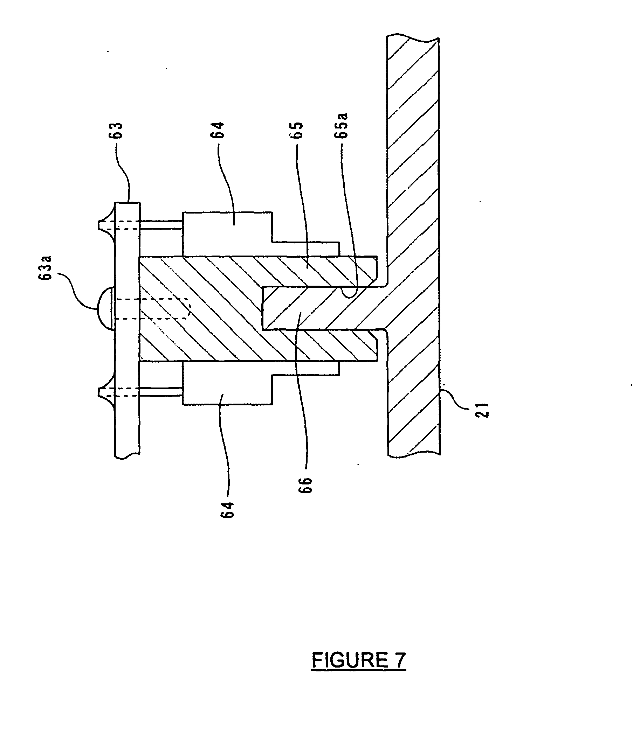

Fig. 1 is a side view of an electric two-wheeled vehicle, Fig. 2 is a plan view of a swing arm for supporting a rear wheel, Figs. 3 and 4 are side views, respectively, showing a swing arm for supporting a rear wheel, as seen from the right side of the vehicle body. Fig. 3 depicts an arm body with an electric motor exposed by removal of a gearbox from the arm body and Fig. 4 depicts also the arm body to which the gearbox and a brake shoe are mounted. Fig. 5 is a rear view of the swing arm for supporting the rear wheel, Fig. 6 is a horizontally sectional view of the essential sections, and Fig. 7 is a sectional view of a cooling structure of a switching element.

In the drawings, the reference numeral 1 denotes an electric two-wheeled vehicle according to the embodiment. The electric two-wheeled vehicle is constituted using a foldable vehicle body frame 2. The vehicle body frame 2 comprises a front frame 4 having a head pipe 3 and a rear frame 6 connected to the front frame 4 through a pivot shaft 5. The head pipe 3 supports steering handle 9 and a front fork 8 supporting a front wheel 7.

To the upper side of the rear frame 6 is mounted a seat 10, while to the bottom end is mounted a swing arm 12 for supporting the rear wheel 11. A battery 13 is installed between the seat 10 and the swing arm 12. The seat 10 is supported pivotally up and down to the rear frame 6 to open and close an opening (access opening to the battery) at the top end of the battery storage space located below the seat 10. Accordingly, the battery 13 is detachable to the rear frame 6 while the seat 10 is positioned high.

The swing arm 12 for supporting the rear arm 12, as shown in Fig.2, is composed of an arm body 21 extending in the longitudinal direction on the left side of the rear wheel 11, a front arm 22 attached to the right side of the front end of the arm body 21 in the longitudinal direction of the vehicle body, a gearbox 23 mounted to the rear end of the arm body 21, and a rear wheel driving device 24 disposed inside of the gearbox 23 at the rear end of the arm body 21. The front ends of the arm body 21 and the front arm 22 are pivotally mounted around the pivot shaft 25 (Refer to Fig. 1.) of the rear frame 6 upward and downward.

At the rear end of an arm section 21 a extending in the longitudinal direction of the vehicle body, the arm body 21, as shown in Fig. 1, is formed in one piece with a rear wheel support section 21b having the shape of a circle, as seen from the rear side of the vehicle body. On the undersurface of the arm section 21a is provided a cushioning bracket 21c that protrudes downwardly. A rear cushioning unit 26 is interposed between the cushioning bracket 21 c and a bottom bracket 6a of the rear frame 6.

The rear wheel support section 21 b, as shown in Fig. 6, is formed to be cylindrical and has a bottom wall and a top opening on its right side (that is, upper side in Fig. 6) in the longitudinal direction of the vehicle body. The gearbox 23 is secured to the opening by fastening bolts 27 (Refer to Fig. 4).

The swing arm 12 for supporting the rear wheel constitute the electric driving unit according to the invention, the rear wheel support section 21b and the gearbox 23 constitute a casing for the electric driving unit according to the invention. The space enclosed by the rear wheel support 21 b an the gearbox 23 constitutes a motor storage space S (Refer to Fig. 6.). Within the motor storage space S, a rear wheel drive device 24, which is described hereinafter, is contained.

The rear wheel drive device 24, as shown in Fig. 6, is comprised of an electric motor 31, a planetary gear speed reducer 32 arranged in coaxial with the electric motor 31, and a control 33 for controlling the electric motor 31.

In this embodiment, the electric motor 31 is used as an axial-gap type electric motor in which its axial direction is parallel to the transverse direction of the vehicle body. Particularly, the electric motor 31 is arranged such that a stator 35 having a plurality of coils 34 is located in the motor storage space S at the left end portion thereof in the longitudinal direction of the vehicle body and secured to an arm body 21, and a disk-like rotor 37 facing the coils 34 and having main magnets 36 is positioned on the right side of the stator 35 in the longitudinal direction of the vehicle body. Thus, the use of the axial-gap type electric motor 31 allows the coils 34 to be place in a common plane and further the rear wheel drive device 24 to be compact in its axial direction. The electric motor 31 may be a generally used radial type one, without limitation to the axial-gap type electric motor.

The rotary shaft 38 of the rotor 37 is rotatively supported at its left end by the arm body 21 through a bearing 39 and at its right end by the output shaft 40 of the planetary gear speed reducer 32 through a bearing 41, as seen in the forward direction of the vehicle.

As shown in Fig. 3, the coils 34 are arranged in the rotational direction of the electric motor 31. Particularly, they are placed along the inside surface of the rear wheel support 21b of the arm body 21 with an arrangement in a C-shape that is opened forward, as in the side view in Fig. 3. The opening of the "C" is formed by removing neighboring two coils of a plurality of coils 34 equally placed totally along the inside surface of the rear wheel support 21b. To the opening, a rear half of the control 33, which will be described hereinafter, is faced.

The main magnets 36 are secured to the outer section 37a of the rotor 37, as shown in Fig. 6. The inner section 37b of the rotor 37 to which a rotary shaft 38 is fixed is formed to locate on the left side of the outer section 37a. To the inside of a cylindrical wall 37c formed to connect the outer and the inner sections 37a and 37b, the left end of the planetary gear speed reducer 32 is faced.

The planetary gear reducer 32 is comprised of a sun gear 42 fixed to the rotary shaft 38 of the electric motor 31; three planetary gears 43 engaging the sun gear 42; a cylindrical internal gear 44 that is formed so as to surround and engage the planetary gears 43; a carrier 46 supporting to rotate each of the planetary gears through respective pins 45. The internal gear 44 is fixed to the gearbox 23. The carrier 46 is formed with an output shaft 40 in a piece at its right end, on the right side of the planetary gear support section 46a having pins 45 and is rotatively supported by the gearbox 23 through a bearing 47. To the output shaft 40 is connected a rear wheel 11 to which the power from the electric motor 31 is transmitted though speed reduction by the planetary gear speed reducer 32. In other words, the output shaft 40 of the planetary gear speed reducer 32 constitutes the axle of the rear wheel 11.

The rear wheel 11, as shown in Figs. 2 and 5, is comprised of a disk wheel 52 around the outer peripheral of which a tire 51 is mounted and a brake drum 54 coaxially mounted on the disk wheel 52 with fastening bolts 53. A boss 54a formed coaxially on the brake drum 54 is fitted to the output shaft 40 with spline coupling and are fastened together with a lock nut 55. The drum brake having the brake drum 54 has been already known, in which a pair of brake shoes 59, 59 are attached to a support pin 56 and a cam 57 through tensioning springs 58, as shown in Fig. 4.

The disk wheel 52 is formed such that the inner section thereof to which the brake drum 54 is attached is placed on the right side of the outer section having a rim 52a, as seen in the forward direction of the vehicle and contains a motor mounting section between the inner and the outer sections. In this embodiment, as shown in Fig. 5, the inner section of the disk wheel 52 is placed on the right side, as seen in the forward direction of the vehicle, such that the central portion, along the transverse direction, of the motor mounting section (the rear wheel support 21b and the gearbox 23) of the swing arm 12 for supporting the rear wheel is superposed with the rear wheel 11, as seen from the rear side of the vehicle. In Fig. 5, the centerline of the electric two-wheeled vehicle 1 in the transverse direction is represented by a dashed line C.

The control 33, as shown in Figs. 3, 4 and 6, is disposed at the boundary portion between the rear wheel support 21b and the arm section 21a of the arm body 21 and along the arm section 21a and is, as described previously, contained together with the electric motor 31 in the motor storage space S so as to face between two coils 34 of the motor 31.

As shown in Fig. 6, on the surface of the first substrate 61 of the element 33, a hall element 62 for detecting the position of the rotor, and on the surface of the second substrate 63, a switching element 64 is mounted. In the hall element 62, as shown in Fig. 3, a detecting section is exposed on the right side surface 33a of the control 33 facing the rotor 37, as seen in the forward direction of the vehicle body, to detect the main magnets 36 of the rotor 37.

The switching element 64 is composed of a power transistor and, as shown in Figs. 6 and 7, mounted on a heat sink 65 through which it is connected to the arm body 21. The heat sink 65 is secured onto the second substrate 63 by a fastening screw 63a. In the embodiment, a plate-like projection 66 is provided on the arm body 21. The heat sink 65 has a rectangular cross section having an opening recess for receiving to fit with the projection 66. The fitting sections of both members can slide to move each other in the fitting directions (in Figs. 6 and 7, the up and down direction and the direction normal to the drawing sheets). This structure for fitting allows the heat generated in the switching element 64 to be transmitted to the arm body 21 through both the contacting surfaces of the heat sink 65 having a convex 65a (refer to Fig. 7) and the projection 66. The projection 66 constitutes the concave according to the present embodiment and also constitutes a heat radiating plate 65.

In wiring for connecting the control 33 and the electric motor 31, as shown in Fig. 3, are used electrode plates 71 because the element 33 is close to the coils 34, while in wiring for connecting the element 33 to a battery 13 and an operator for the accelerator (not shown), as shown in Figs. 3 and 4, are used insulated wires 72, 73. The electrode 71 is soldered at its end to the second substrate 63 and the other end (rear end) of the electrode 71 that is projected rearward from the element 33 is connected to the brush (not shown) of the electric motor 31. The insulated wires 72, 73 are routed along the inner side surface to the front section of the arm section 21 a, as seen in the forward direction of the vehicle.

In the electric driving unit of the electric two-wheeled vehicle 1, the electric motor 31 and the planetary gear speed reducer 32 are coaxially arranged each other and they are supported by a casing (the rear wheel support 21 b and the gearbox 23). Also, since the control 33 for controlling the electric motor 31 is disposed close to the electric motor 31, within a motor storage space S formed in the casing, both the control 33 and the electric motor 31 are stored in a space and the volume of the wall for forming a storage space can be reduced.

Furthermore, since the electric motor 31 and the planetary gear speed reducer 32 are coaxially arranged, both can be located together at a position. As a result, the use of the electric driving unit as a driving power source allows to constitute the electric two-wheeled vehicle 1 having a compact driving system. Specifically, since this electric two-wheeled vehicle 1 is constituted such that the central portion of a motor mounting section in the transverse direction of the vehicle is located in a relation of superposition with respect to the drive wheel, as seen from the rear side, the electric motor mounting section of the electric driving unit can be stored in a dead space formed inside of the rear wheel11, and, as a result, the width in the transverse direction becomes narrower. Furthermore, the external appearance can be improved because the central portion of the motor mounting section can be hidden by the rear wheel 11 in the transverse direction, as seen from the rear side.

Further, in the electric driving unit according to this embodiment, the control 33 is close to the electric motor 31 and, therefore, the length of the wires for connecting the control 33 and the electric motor 31 can be made shorter. Additionally, the wires for connecting the control 33 and the electric motor can be stored in the motor storage space S. In this embodiment, since the electrode plate 71 protruding from the control 33 is connected to the electric motor 31, the number of electrical connections can be minimized and the reliability of the electrical connections is also improved, compared to the case that additional wires for extension is required in mid-course.

In the electric driving unit according to the embodiment, since the control 33 is disposed between coils 34 in a stator 35 of the electric motor 31, the element 33 can be located in the dead space formed between the coils 34 and, as a result, the wiring length between the control 33 and the electric motor 31 can be made shorter.

As the space between coils 34 for housing the control is defined by removing three of the coils 34 that are equally spaced in the circumferential direction, the element 33 having a size equal to or larger than the coil 34 can be stored in the electric motor 31 without the increase of the diameter of the electric motor 31.

Since the hall element 62 for detecting the position of the rotor is mounted on the surface of the first substrate 61 in the control 33, any dedicated substrate on which a hall element 62 is mounted is not required. As a result, the numbers of parts and man-hour for assembly work can be reduced.

Since the hall element 62 is constituted so as to detect the main magnets 36, any sensor magnet detected by a dedicated hall element 62 is not required. As a result, the numbers of parts and man-hour for assembly work can be reduced.

In the control 33, the heat sink 65 of the switching element 64 is in contact with the arm body 21 (motor storage casing). Therefore, the heat generated in the switching element 64 conducts to the arm body 21 through the heat sink 65, which allows the switching element 64 to be cooled efficiently.

At the contact portion between the heat sink 65 of the switching element 64 and the arm body 21, the plate-like projection 66 provided on the arm body 21 is fitted in the rectangular cross sectional opening recess of the heat sink 65, resulting in the increase of the contact area between the heat sink 65 and the arm body 21 to improve the efficiency of heat radiation. Since the heat sink 65 can move slightly relative to the projection 66, vibration generated in the arm body 21 cannot be transmitted to the switching element 64 via the heat sink 65 and the connection of the switching element 64 to the second substrate 63 is protected from the application of any external force. Additionally, there occurs no thermal stress, although the heat sink 65 is connected to the arm body 21.

Additionally, since the control 33 is disposed along the arm section 21a at the front end of the rear wheel support section 21b of the arm body 21, the control 33 and the electric motor 31 can be located approximately at the same position in the transverse direction, resulting in a more compact electric two-wheeled vehicle in the transverse direction. The wires (insulated wires 72, 73) for connecting the batteries 13 and other electronic components to the control 33 can be routed along the swing arm 12 for supporting the rear wheel 11 because the element 33 is located between the electric motor 31 and the vehicle body frame 2.

In the embodiments as has been described, an example use of the electric driving unit according to the teaching of the invention as a driving power source for an electric two-wheeled vehicle 1 is disclosed. However, the electric driving unit according to the teaching of the invention may be applied to other electric vehicle, such as electric four- or three-wheeled vehicles. In such vehicles, the axes of the speed reducer32 and the electric motors 31 should be arranged in parallel to the transverse direction of the vehicle and also the output shaft 40 of the speed reducer 32 should be common to the axle of the drive wheel. When such electric vehicles are constituted, the central portion of the motor mounting section in the transverse direction of the vehicle body can be structured to superpose the rear wheel, as seen from the rear side.

The description above refers to an electric driving unit comprising a casing in and by which an electric motor and a speed reducer coaxially arranged each other are supported, wherein a control for controlling the electric motor is disposed close to the electric motor, within a motor storage space formed in the casing.

Accordingly, as previously described, the volume of the wall that forms a space for storing the electric motor and the control can be reduced and also the electric motor and the speed reducer are coaxially arranged, and a compact electric driving unit can be provided.

Further, since the length of the wires for connecting the control and the electric motor can be made shorter in addition to the less volume of the wall, the production cost is reduced. Additionally, since the wires for connecting the control and the electric motor can be stored in the motor storage space, those wires are not damaged by the application of external force. Since, instead of wires the electrode plate protruding from the control is used for the connection to the electric motor, the number of electrical connections can be minimized. As a result, an electric driving unit having high reliability of the electrical connections is realized.

The control may be disposed between coils in a stator of the electric motor.

Accordingly, in a dead space formed between coils, the element can be contained. Consequently, a more compact electric driving unit can be fabricated, although the control together with the electric motor can be contained in one space. The wiring length between the control and the electric motor can be made shorter. Accordingly, additional cost reduction is achieved. Direct connection of the control to the coil enables to improve the reliability of the electrical connections.

A space formed between coils for housing the control may be defined by removing at least one of the coils that are equally spaced in the circumferential direction.

Accordingly, the control having a size equal to or larger than the coil can be contained within the electric motor without increase of the diameter thereof. Consequently, a control having a larger size can be contained in the electric motor while reducing the size of the electric driving unit.

A hall element for detecting the position of the rotor may be mounted on the surface of a substrate in the control.

Accordingly, any dedicated substrate on which a hall element is mounted is not required. Consequently, the numbers of parts and man-hour for assembly work can be reduced, resulting in further cost reduction.

The hall element may detect main magnets.

Accordingly, any dedicated substrate on which a hall element is mounted is not required. Consequently, the numbers of parts and man-hour for assembly work can be reduced, resulting in further cost reduction.

A heat radiating plate of a switching element in the control may be in contact with the motor storage casing.

Accordingly, the heat generated in the switching element is conducted via the heat radiating plate to the motor storage casing. Consequently, the switching element is cooled efficiently.

The contact portion of the heat radiating plate of the switching element and the mating contact portion of the motor storage casing may be formed such that one of the two contact portions has a concave and the other has a convex so as to fit each other.

Accordingly, the surface area of the contact between the heat radiating plate and the casing can be increased. Consequently, the heat conductive resistance therebetween is reduced to cool the switching element more efficiently. Since the heat radiating plate is movable in the fitting direction relative to the casing, the reliability is improved without transmission of vibration of the casing to the switching element and creation of thermal stress.

The description above further refers to an electric vehicle having a drive wheel driven by an electric driving unit as described above, wherein the common axis of the electric motor and the speed reducer is parallel to the transverse direction of the vehicle body; the output shaft of the speed reducer is common to the axle of the drive wheel.

Therefore, a compact electric vehicle that can be fabricated at low manufacturing cost is provided.

The central portion of a motor mounting section in the transverse direction of the vehicle body may be located in a relation of superposition with respect to the drive wheel, as seen from the rear side.

Accordingly, the motor mounting section of the electric driving unit can be contained in a dead space formed inside of the drive wheel. Consequently, the electric vehicle can be made smaller with the electric driving unit being connected to the rear wheel.

Also, the central portion of the motor mounting section in the transverse direction is hidden by the drive wheel, as seen from the rear side. The external appearance is also improved.

The description above particularly refers to an electric two-wheeled vehicle having a rear wheel driven by an electric driving unit as described above, wherein a swing arm for supporting the rear wheel carries the electric driving unit and is pivotally up and down mounted to a vehicle body frame; the axis of the electric motor and the axis of the speed reducer are parallel to the transverse direction of the vehicle body; and the output shaft of the speed reducer is common to the axle of the rear wheel.

Therefore, a compact electric two-wheeled vehicle that can be fabricated at low manufacturing cost is provided.

The central portion of a motor mounting section in the transverse direction of the vehicle may be located in a relation of superposition with respect to the rear wheel, as seen from the rear side.

Accordingly, the motor mounting section of the electric driving unit can be contained in a dead space formed inside of the rear wheel. Also, the central portion of the motor mounting section in the transverse direction is hidden by the drive wheel, as seen from the rear side. Consequently, external appearance can be also improved.

The control for the electric driving unit may be disposed at the front end of the motor mounting section in the longitudinal direction of the vehicle body, along the arm section of the swing arm.

Accordingly, the control and the electric motor can be located at approximately the same position in the transverse direction. Consequently, an electric two-wheeled vehicle having narrower width in the transverse direction of the vehicle body can be provided. As the control is located between the electric motor and the vehicle body frame, and the wires for connecting the control to a battery and other electronic components mounted in the vehicle body frame can be routed along the swing arm for supporting the rear wheel, wiring work is facilitated.

Briefly summarizing the above, there is provided an electric driving unit that is fabricated at low cost and has a small size, wherein an electric motor 31 and a speed reducer 32 are disposed coaxially and supported in and by a casing, and a control 33 for controlling the electric motor 31 is contained in the motor storage space S formed within the casing with the electric motor being close to the control 33.

## Claims

1. Electric driving unit comprising a casing with a motor storage space (S), an electric motor (31) and a speed reducer (32), wherein the electric motor (31) and the speed reducer (32) are supported by and arranged coaxially to each other in the casing, and wherein a controlling means (33) for controlling the electric motor (31) is provided being disposed close to the electric motor (31) within the motor storage space (S) formed in the casing; wherein the electric motor (31) comprises a stator (35) having a plural number of coils (34), and comprises a rotor (37) having a plural number of main magnets (36),
**characterized in that**
the coils (34) of the stator (35) and the main magnets (36) of the rotor (37) are faced in an axial direction of the rotor (37).

2. Electric driving unit according to claim 1, **characterized in that** the controlling means (33) is disposed between different coils (34) of the stator (35) of the electric motor (31).

3. Electric driving unit according to claim 2, **characterized in that** the coils (34) are arranged in a shape of a ring segment in a circumferential direction of the stator (35), wherein adjacent coils (34) are equally spaced to each other and a space is provided between a first and a last of said coils (34) in the circumferential direction of the stator (35) for housing the controlling means (33).

4. Electric driving unit according to at least one of the preceding claims 1 to 3, **characterized by** a hall element (62) for detecting a position of a rotor (37) of the electric motor (31) being mounted on a surface of a substrate 61 of the controlling means (33).

5. Electric driving unit according to claim 4, **characterized in that** the hall element (62) is adapted to detect the main magnets (36).

6. Electric driving unit according to at least one of the preceding claims 1 to 5, **characterized by** a heat radiating plate (65) of a switching element (64) in the controlling means (33) which is in contact with the casing.

7. Electric driving unit according to claim 6, **characterized in that** the contact portion of the heat radiating plate (65) of the switching element (64) and a mating contact portion of the casing are formed such that one of the two contact portions has a concave shape and the other has a convex shape so as to fit each other.

8. Electric vehicle comprising a drive wheel, wherein the drive wheel is driven by an electric driving unit according to at least one of the preceding claims 1 to 7.

9. Electric vehicle according to claim 8, **characterized in that** an axis of the electric motor (31) and an axis of the speed reducer (32) are parallel to a transverse direction of the vehicle body and the output shaft of the speed reducer (32) is common to an axle of the rear wheel.

10. Electric vehicle according to claim 8 or 9, **characterized by** a common axis of the electric motor (31) and the speed reducer (32) being arranged parallel to a transverse direction of the vehicle body of the electric vehicle.

11. Electric vehicle according to at least one of the preceding claims 8 to 10, **characterized in that** a central portion of a motor mounting section in the transverse direction of the vehicle body is coaxial with the drive wheel, as seen from the rear side.

12. Electric vehicle according to at least one of the preceding claims 8 to 11, **characterized in that** the electric vehicle comprises two wheels, wherein the rear wheel constitutes the drive wheel driven by the electric driving unit.

13. Electric vehicle according to at least one of the preceding claims 8 to 12, **characterized by** a swing arm (12) for supporting the rear wheel being adapted to carry the electric driving unit and being pivotally mounted to a vehicle body frame.

14. Electric vehicle according to at least one of the preceding claims 8 to 13, **characterized in that** the controlling means (33) for the electric driving unit is disposed at a front end of the motor mounting section in a longitudinal direction of the vehicle body, along an arm section of the swing arm (12).

## Patentansprüche

1. Elektrische Antriebseinheit, aufweisend ein Gehäuse mit einem Motorunterbringungsraum (S), einem Elektromotor (31) und einem Drehzahlverminderer (32), wobei der Elektromotor (31) und der Drehzahlverminderer (32) miteinander gelagert und koaxial in dem Gehäuse angeordnet sind und wobei eine Steuerungseinrichtung (33) zum Steuern des Elektromotors (31) vorgesehen ist, die nahe an dem Elektromotor (31) innerhalb des Motorunterbringungsraumes (S), gebildet in dem Gehäuse, angeordnet ist; wobei der Elektromotor (31) einen Stator (35) aufweist, der eine mehrfache Anzahl von Wicklungen (34) hat und einen Rotor (37) aufweist, der eine mehrfache Anzahl von Hauptmagneten (36) hat,
**dadurch gekennzeichnet, dass**
die Wicklungen (34) des Stators (35) und die Hauptmagnete (36) des Rotors (37) in einer axialen Richtung des Rotors (37) einander zugewandt sind.

2. Elektrische Antriebseinheit nach Anspruch 1, **dadurch gekennzeichnet, dass** die Steuerungseinrichtung (33) zwischen verschiedenen Wicklungen (34) des Stators (35) des Elektromotors (31) angeordnet ist.

3. Elektrische Antriebseinheit nach Anspruch 2, **dadurch gekennzeichnet, dass** die Wicklungen (34) in einer Form eines Ringsegmentes in einer Umfangsrichtung des Stators (35) angeordnet sind, wobei benachbarte Wicklungen (34) zueinander gleich beabstandet sind und ein Raum vorgesehen ist zwischen einer ersten und einer letzten der Wicklungen (34) in der Umfangsrichtung des Stators (35) zum Unterbringen der Steuerungseinrichtung (33).

4. Elektrische Antriebseinheit nach zumindest einem der vorhergehenden Ansprüche 1 bis 3, **gekennzeichnet durch** ein Hall- Element (62) zum Erfassen einer Position eines Rotors (37) des Elektromotors (31), das auf der Oberfläche eines Substrates (62) der Steuerungseinrichtung (33) montiert ist.

5. Elektrische Antriebseinheit nach Anspruch 4, **dadurch gekennzeichnet, dass** das Hall- Element (62) vorgesehen ist, die Hauptmagnete (36) zu erfassen.

6. Elektrische Antriebseinheit nach zumindest einem der vorhergehenden Ansprüche 1 bis 5, **gekennzeichnet durch** eine Wärmeabstrahlungsplatte (65) eines Schaltelementes (64) in der Steuerungseinrichtung (33), die mit dem Gehäuse in Kontakt ist.

7. Elektrische Antriebseinheit nach Anspruch 6, **dadurch gekennzeichnet, dass** der Kontaktabschnitt der Wärmeabstrahlungsplatte (65) des Schaltelementes (64) und ein Gegenkontaktabschnitt des Gehäuses derart gebildet sind, dass einer der zwei Kontaktabschnitte eine konkave Form hat und der andere eine konvexe Form hat, um zueinander zu passen.

8. Elektrofahrzeug, das ein Antriebsrad aufweist, wobei das Antriebsrad durch eine elektrische Antriebseinheit nach zumindest einem der vorhergehenden Ansprüche 1 bis 7 angetrieben wird.

9. Elektrofahrzeug nach Anspruch 8, **dadurch gekennzeichnet, dass** eine Achse des Elektromotors (31) und eine Achse des Drehzahlverminderers (32) parallel zu einer Querrichtung der Fahrzeugkarosserie sind und die Ausgangswelle des Drehzahlverminderers (32) mit einer Achse des Hinterrades gemeinsam ist.

10. Elektrofahrzeug nach Anspruch 8 oder 9, **gekennzeichnet durch** eine gemeinsame Achse des Elektromotors (31) und des Drehzahlverminderers (32), die parallel zu der Querrichtung der Fahrzeugkarosserie des Elektrofahrzeuges angeordnet sind.

11. Elektrofahrzeug nach zumindest einem der vorhergehenden Ansprüche 8 bis 10, **dadurch gekennzeichnet, dass** ein zentraler Abschnitt eines Motormontageabschnittes, wenn von hinten gesehen, in der Querrichtung der Fahrzeugkarosserie mit dem Antriebsrad koaxial ist.

12. Elektrofahrzeug nach zumindest einem der vorhergehenden Ansprüche 8 bis 11, **dadurch gekennzeichnet, dass** ein Elektrofahrzeug zwei Räder aufweist, wobei das Hinterrad das Antriebsrad, angetrieben durch die elektrische Antriebseinheit, bildet.

13. Elektrofahrzeug nach zumindest einem der vorhergehenden Ansprüche 8 bis 12, **gekennzeichnet durch** einen Schwingarm (12) zum Lagern des Hinterrades, der vorgesehen ist, die elektrische Antriebseinheit zu tragen und der an dem Fahrzeugkarosserierahmen schwenkbar montiert ist.

14. Elektrofahrzeug nach zumindest einem der vorhergehenden Ansprüche 8 bis 13, **dadurch gekennzeichnet, dass** die Steuerungseinrichtung (33) für die elektrische Antriebseinheit an einem vorderen Ende des Motormontageabschnittes in einer Längsrichtung der Fahrzeugkarosserie, entlang eines Armabschnittes des Schwingarmes (12), angeordnet ist.

## Revendications

1. Unité d'entraînement électrique comprenant un boîtier muni d'un espace pour moteur (S), un moteur électrique (31) et un réducteur de vitesse (32), dans laquelle le moteur électrique (31) et le réducteur de vitesse (32) sont supportés par le boîtier et sont disposés de manière coaxiale l'un par rapport à l'autre dans le boîtier, et dans laquelle des moyens de contrôle (33) destinés à contrôler le moteur électrique (31) sont fournis et disposés à proximité du moteur électrique (31) à l'intérieur de l'espace pour moteur (S) formé dans le boîtier ; dans laquelle le moteur électrique (31) comprend un stator (35) ayant une pluralité de bobines (34) et comprend un rotor (37) ayant une pluralité d'aimants principaux (36).
**caractérisée en ce que**
les bobines (34) du stator (35) et les aimants principaux (36) du rotor (37) se font face dans une direction axiale du rotor (37).

2. Unité d'entraînement électrique selon la revendication 1, **caractérisée en ce que** les moyens de contrôle (33) sont disposés entre différentes bobines (34) du stator (35) du moteur électrique (31).

3. Unité d'entraînement électrique selon la revendication 2, **caractérisée en ce que** les bobines (34) sont disposées sous une forme de segment en anneau dans une direction circonférentielle du stator (35), dans laquelle les bobines adjacentes (34) sont espacées de manière égale les unes par rapport aux autres et un espace est prévu entre une première et une dernière desdites bobines (34) dans la direction circonférentielle du stator (35) afin de loger les moyens de contrôle (33).

4. Unité d'entraînement électrique selon au moins l'une des revendications précédentes 1 à 3, **caractérisée par** un élément de Hall (62) destiné à détecter une position d'un rotor (37) du moteur électrique (31) étant monté sur une surface d'un substrat (61) des moyens de contrôle (33).

5. Unité d'entraînement électrique selon la revendication 4, **caractérisée en ce que** l'élément de Hall (62) est adapté pour détecter les aimants principaux (36).

6. Unité d'entraînement électrique selon au moins l'une des revendications précédentes 1 à 5, **caractérisée par** une plaque à rayonnement de chaleur (65) d'un élément de commutation (64) dans les moyens de contrôle (33) qui est en contact avec le boîtier.

7. Unité d'entraînement électrique selon la revendication 6, **caractérisée en ce que** la partie de contact de la plaque à rayonnement de chaleur (65) de l'élément de commutation (64) et une partie de contact correspondante du boîtier sont formées de manière à ce que l'une des deux parties de contact présente une forme concave et l'autre présente une forme convexe de manière à pouvoir s'ajuster l'une par rapport à l'autre.

8. Véhicule électrique comprenant une roue motrice, dans lequel la roue motrice est actionnée par une unité d'entraînement électrique selon au moins l'une des revendications précédentes 1 à 7.

9. Véhicule électrique selon la revendication 8, **caractérisé en ce qu'**un axe du moteur électrique (31) et un axe du réducteur de vitesse (32) sont parallèles à une direction transversale de la carrosserie du véhicule et l'arbre de sortie du réducteur de vitesse (32) est commun à un pivot de la roue arrière.

10. Véhicule électrique selon la revendication 8 ou 9, **caractérisé par** un axe commun du moteur électrique (31) et du réducteur de vitesse (32) étant disposé de manière parallèle à une direction transversale de la carrosserie du véhicule électrique.

11. Véhicule électrique selon au moins l'une des revendications précédentes 8 à 10, **caractérisé en ce qu'**une partie centrale d'une section de support pour moteur dans la direction transversale de la carrosserie du véhicule est coaxiale à la roue motrice, lorsqu'elle est vue du côté arrière.

12. Véhicule électrique selon au moins l'une des revendications précédentes 8 à 11, **caractérisé en ce que** le véhicule électrique comprend deux roues, dans lequel la roue arrière constitue la roue motrice actionnée par l'unité d'entraînement électrique.

13. Véhicule électrique selon au moins l'une des revendications précédentes 8 à 12, **caractérisé par** un bras oscillant (12) destiné à supporter la roue arrière étant adapté pour supporter l'unité d'entraînement électrique et étant monté de manière pivotante sur un châssis de carrosserie du véhicule.

14. Véhicule électrique selon au moins l'une des revendications précédentes 8 à 13, **caractérisé en ce que** les moyens de contrôle (33) pour l'unité d'entraînement électrique sont disposés au niveau d'une extrémité avant de la section de support pour moteur dans une direction longitudinale de la carrosserie du véhicule, le long d'une section de bras du bras oscillant (12).
